(19) Europäisches Patentamt
European Patent Office
Office européen des brevets

(11) EP 0 600 569 B1

(12) # EUROPÄISCHE PATENTSCHRIFT

(45) Veröffentlichungstag und Bekanntmachung des Hinweises auf die Patenterteilung:
**19.05.1999 Patentblatt 1999/20**

(51) Int Cl.⁶: **G06F 7/60**

(21) Anmeldenummer: **93250290.9**

(22) Anmeldetag: **26.10.1993**

(54) **Verfahren zur Auswertung einer Menge linguistischer Regeln**

Method for evaluating a number of linguistic rules

Procédé pour l'évaluation d'un nombre de règles linguistiques

(84) Benannte Vertragsstaaten:
**AT BE CH DE FR GB IT LI NL SE**

(30) Priorität: **12.11.1992 DE 4238772**

(43) Veröffentlichungstag der Anmeldung:
**08.06.1994 Patentblatt 1994/23**

(73) Patentinhaber: **DaimlerChrysler AG**
**70567 Stuttgart (DE)**

(72) Erfinder:
- **Jüngst, Ernst-Werner, Dr.**
  **D-13349 Berlin (DE)**
- **Meyer-Gramann, Klaus Dieter, Dr.**
  **D-10589 Berlin (DE)**

(74) Vertreter: **Lindner-Vogt, Karin, Dipl.-Phys.**
**DaimlerChrysler AG**
**Intellectual Property Management,(FTP/U)**
**Sedanstrasse 10 / Gebäude 17**
**89077 Ulm (DE)**

(56) Entgegenhaltungen:
**EP-A- 0 509 796**

- **AUTOMATISIERUNGSTECHNISCHE PRAXIS - ATP Bd. 34, Nr. 4 , 1992 , MUNCHEN DE Seiten 176 - 184 XP000268662 H. PREUSS 'Fuzzy Control - heuristische Regelung mittels unscharfer Logik'**
- **IEEE TRANSACTIONS ON SYSTEMS, MAN AND CYBERNETICS Bd. 20, Nr. 2 , 1990 , NEW YORK US Seiten 404 - 418 C. LEE 'Fuzzy Logic in Control Systems: Fuzzy Logic Controller - Part I'**
- **PROCEEDINGS OF THE IEEE INTERNATIONAL CONFERENCE ON FUZZY SYSTEMS, 8-12 MäRZ 1992, SAN DIEGO, CA., USA 1992 , IEEE, NEW YORK, USA Seiten 709 - 715 M. MIZUMOTO 'REALIZATION OF PID CONTROLS BY FUZZY CONTROL METHODS'**
- **PROCEEDINGS OF THE SECOND IEEE INTERNATIONAL CONFERENCE ON FUZZY SYSTEMS. 28. MäRZ - 1. APRIL 1993, SAN FRANCISCO, CA., USA. Bd. 1 , 1993 , IEEE, NEW YORK, USA. Seiten 606 - 611 XP000371480 H. ISHIBUCHI ET AL. 'Empirical Study on Learning in Fuzzy Systems'**

EP 0 600 569 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung bezieht sich auf ein Verfahren gemäß dem Oberbegriff des Patentanspruchs 1. Ein solches Verfahren ist u. a. durch den Aufsatz von C. L. McCullough: "An anticipatory fuzzy logic controller utilizing neutral net prediction" in der Zeitschrift "Simulation" 58, May 1992, Seiten 327 bis 332, bekannt.

Unscharfe Regler ("fuzzy controller") haben in den letzten Jahren zunehmend Bedeutung erlangt, vgl. zum Beispiel H. P. Preuß: "Fuzzy controlheuristische Regelung mittels unscharfer Logik (Automatisierungstechnische Praxis 34, 1992, Heft 4, Seiten 176 bis 184(Teil I) und Heft 5, Seiten 239 bis 246 (Teil II)).

Mit der Erfindung wird ein unscharfer Regler behandelt, der n Eingangsgrößen und eine Ausgangsgröße Z aufweist. Die Aktionen des unscharfen Reglers werden durch eine Menge $\{R_1, \ldots, R_N\}$ linguistischer Regeln gesteuert. Jede dieser Regeln besitzt als Prämisse entweder eine linguistische Aussage über eine Eingangsgröße oder eine UND-Verknüpfung von mehreren linguistischen Aussagen über paarweise verschiedene Eingangsgrößen, und als Konklusion weist die Regel eine linguistische Aussage über die Ausgangsgrößen des Reglers auf. Jede linguistische Aussage ist durch eine unscharfe Menge ("fuzzy set") beschrieben, die durch ihre Zugehörigkeitsfunktion gekennzeichnet ist. Dieser Aufbau ist der gebräuchlichste für einen unscharfen Regler.

Die meisten der in der Literatur beschriebenen unscharfen Regler arbeiten nach folgendem Prinzip:

- Die aktuellen Werte aller Eingangsgrößen werden bestimmt und dem unscharfen Regler verfügbar gemacht.
- Die N Regeln der Regelmenge werden parallel auf die aktuellen Werte der n Eingangsgrößen angewendet. Jede Regelanwendung liefert eine unscharfe Menge, die durch eine Zugehörigkeitsfunktion gekennzeichnet ist. Die N unscharfen Mengen werden zu einer einzigen zusammengefaßt.
    - In die Bestimmung der i-ten unscharfen Menge fließt die Zugehörigkeitsfunktion ein, die die Konklusion der i-ten Regel $R_i$ kennzeichnet, sowie die aktuelle Gültigkeit der Prämisse von $R_i$. Diese aktuelle Gültigkeit wird berechnet aus den Zugehörigkeitsgraden der aktuellen Werte der Eingangsgrößen, auf die in der Prämisse Bezug genommen wird, zu den Zugehörigkeitsfunktionen, die die linguistischen Aussagen der Prämisse kennzeichnen. Besteht die Prämisse aus einer einzigen linguistischen Aussage, ist ihre aktuelle Gültigkeit gleich dem entsprechenden Zugehörigkeitswert. Besteht die Prämisse aus mehreren linguistischen Aussagen, so wird ihre aktuelle Größe bestimmt, indem auf die entsprechenden Zugehörigkeitswerte eine T-Norm ("triangular norm") angewendet wird. Die bislang in der Literatur am häufigsten erwähnte T-Norm ist das Minimum. T-Normen werden z.B. in C.C.Lee: "Fuzzy Logic in Control Systems: Fuzzy Logic Controller" (IEEE Transactions on Systems, Man, and Cybernetics 20, pp. 404 bis 435, 1990) beschrieben.
    - Um N unscharfe Mengen zu einer einzigen zusammenzufassen, wird eine T-Conorm auf die N kennzeichnenden Zugehörigkeitsfunktionen angewendet. Die übliche T-Conorm ist die punktweise Maximumbildung, vgl. C.C.Lee (a.a.O.).
- Durch "defuzzification" wird aus der im vorigen Schritt bestimmten unscharfen Menge eine reelle Zahl $z_t$ gebildet und als aktueller Wert der Ausgangsgröße Z verwendet. Eine übliche Methode der defuzzification ist es, den x-Wert des Schwerpunktes ("center of gravity") zu bestimmen.

Die Zugehörigkeitsfunktionen, die linguistische Aussagen über Kenngrößen eines Reglers charakterisieren, sind in vielen Anwendungen trapezförmig, siehe z.B. Preuß (a.a.O.).

Ein Nachteil der üblichen Arbeitsweise eines unscharfen Reglers ist, daß zur Laufzeit viele Rechenoperationen mit Zugehörigkeitsfunktionen erforderlich sind. Dies kann insbesondere bei hohen Geschwindigkeitsanforderungen, zum Beispiel beim Echtzeitbetrieb, von Nachteil sein. Um auch in diesem Fall nicht auf besonders leistungsfähige Hardware angewiesen zu sein, wurden mehrfach unscharfe Regler vorgestellt, die gemäß der im Oberbegriff des Anspruchs 1 angegebenen Beziehung (1) oder auf ähnliche Art arbeiten. Beispielhaft genannt sei neben der eingangs genannten Literaturstelle noch der Beitrag von M.Mizumoto: "Realization of PID controls by fuzzy control methods" in Proceed. IEEE Intern. Conf. on Fuzzy Systems 1992, Seiten 709 bis 715.

Fig. 1 der Zeichnung zeigt die Arbeitsweise eines derartigen Reglers nach dem Oberbegriff des Patentanspruchs beispielhaft für den Fall zweier Eingangsgrößen X und Y. Es seien $\mu_i$ und $\nu_i$ die Zugehörigkeitsfunktionen für die linguistische Aussage über X bzw. Y in der Prämisse der Regel $R_i$ und $\lambda_i$ diejenige für die Konklusion von $R_i$. Falls in der Prämisse von $R_i$ nur eine linguistische Aussage über X auftritt, aber keine über Y, so wird formal $\nu_i(y) = 1$ für alle y gesetzt. Falls nur eine Aussage über Y auftritt, wird $\mu_i(x) = 1$ für alle x gesetzt. Es seien $x_t$ und $y_t$ die aktuellen Werte der Eingangsgrößen X und Y. Der Regler arbeitet wie folgt:
In einer ersten Phase wird für i = 1 , ... , N die Zugehörigkeitsfunktion $\lambda_i$ "defuzzifiziert" und dadurch eine reelle Zahl $Z_i$ als Handlungsvorschlag der Regel $R_i$ gewonnen (Schritt I).

In einer zweiten Phase wird zu jedem Abtastzeitpunkt t für i = 1, ..., N der Zugehörigkeitsgrad von $x_t$ zu $\mu_i$ und

der von $y_t$ zu $\nu_i$ bestimmt, und dadurch werden die Werte $a_{i1}(t)$ und $a_{i2}(t)$ gewonnen (Schritt II). Danach werden für i = 1,..., N die Werte $a_{i1}(t)$ und $a_{i2}(t)$ zum aktuellen Gewichtsfaktor $\omega_i(t)$ der Regel $R_i$ zusammengefaßt, wobei das gewöhnliche Produkt oder eine andere T-Norm angewendet wird (Schritt III).

Für i = 1, ..., N wird $\omega_i(t)$ mit der präzisen Konklusion $Z_i$ der Regel $R_i$ multipliziert (Schritt IV). Die dergestalt gewichteten N Aktionsvorschläge werden addiert (Schritt V). Zur Normierung wird die Summe aller Gewichtsfaktoren gebildet (Schritt VI). Der aktuelle Wert $z_t$ der vom unscharfen Regler bestimmten Größe wird durch Division des in Schritt V gebildeten Wertes durch den in Schritt VI bestimmten Wert ermittelt (Schritt VII).

Ein Vorteil dieses Vorgehens gegenüber der klassischen unscharfen Regelung ist der, daß die Arbeit der ersten Phase nicht zur Laufzeit erfolgen muß, sondern vorab bei der Erstellung des Reglers ausgeführt werden kann. Zur Laufzeit braucht dann der unscharfe Regler nur die Arbeit der zweiten Phase zu verrichten. Mit Ausnahme des Schrittes II sind dies ausschließlich Rechenoperationen mit reellen Zahlen, nicht mit Zugehörigkeitsfunktionen.

Nachteile des in Fig. 1 gezeigten Vorgehens sind:

- Da die Summe der Gewichtsfaktoren $\omega_1(t)$, ..., $\omega_N(t)$ im allgemeinen nicht gleich 1 ist, sind zur Laufzeit eine Summation (Schritt VI) und eine Division (Schritt VII) zwecks Normierung der Gewichtsfaktoren erforderlich.
- Für den Fall, daß die Summe der Gewichtsfaktoren und damit der Nenner in der im Oberbegriff des Anspruchs 1 angegebenen Beziehung (1) gleich Null ist, muß eine Sonderbehandlung vorgesehen werden, um eine Division durch Null zu vermeiden.
- Das Vorgehen legt wichtige Parameter des Reglerentwurfs nicht fest, z.B. die T-Norm oder die Gestalt der Zugehörigkeitsfunktionen oder den Umfang des Regelsatzes.

Der Erfindung liegt die Aufgabe zugrunde, das im Oberbegriff des Anspruchs 1 angegebene Verfahren kostengünstiger und leistungsfähiger zu implementieren.

Diese Aufgabe wird gemäß der Erfindung durch die im Patentanspruch 1 beschriebene Verfahrensweise gelöst.

Das erfindungsgemäße Verfahren gewährleistet, daß die Summe der Gewichtsfaktoren stets 1 ist. Dadurch wird zur Laufzeit eine Summation (Schritt VI) und eine Division (Schritt VII) gespart, so daß der unscharfe Regler weniger Rechenzeit bzw. weniger Rechen-Hardware benötigt. Außerdem wird eine - in Fig. 1 nicht dargestellte - Prüfung gespart, ob der Nenner gleich Null ist oder nicht.

Außer dem schon genannten sind weitere Vorteile des erfindungsgemäßen Verfahrens, daß gewährleistet ist, daß

ein unscharfer Regler zu jeder möglichen Kombination von Eingangswerten einen Wert der Ausgangsgröße bestimmen kann, während bei anderen Verfahren nicht ausgeschlossen wird, daß die Summe $\omega_1(t)$ + ... + $\omega_N(t)$ gleich Null zu einem Abtastzeitpunkt ist und der unscharfe Regler deshalb keine Aktion ausführen kann, und die Kennfläche des unscharfen Reglers stetig ist, falls man sich auf stetige Zugehörigkeitsfunktionen für linguistische Aussagen über Eingangsgrößen beschränkt. Viele herkömmlich arbeitende unscharfe Regler können hingegen auch bei stetiger Zugehörigkeitsfunktion eine unstetige Kennfläche aufweisen.

Die Erfindung soll im folgenden anhand der Zeichnung für ein Ausführungsbeispiel erläutert werden. Es zeigen

Fig. 2 einen nach dem erfindungsgemäßen Verfahren arbeitenden unscharfen Regler,
Fig. 3 eine Illustration des Begriffes "fuzzy information system" und
Fig. 4 trapezförmige Zugehörigkeitsfunktionen und Stützstellen.

Fig. 2 zeigt einen unscharfen Regler, der entsprechend dem Verfahren gemäß Anspruch 1 arbeitet. Dadurch, daß der Divisor bei der Bildung der Zahl $z_t$ stets den Wert 1 annimmt, entfallen die in Fig. 1 grau getönten Verfahrensschritte.

Die im Patentanspruch 1 speziell genannten Bedingungen, durch die der Divisor in Beziehung (1) im Oberbegriff des Patentanspruchs 1 bei der Bildung der Zahl $z_t$ immer den Wert 1 besitzt und die im folgenden näher erläutert werden, sind für sich bereits in der Praxis realisiert und mehrfach in der Literatur erwähnt worden. Die im Patentanspruch 1 beschriebene Verfahrensweise wird jedoch in der nicht naheliegenden Kombination der Gesamtheit dieser Bedingungen gesehen.

Fig. 3 illustriert den Begriff "fuzzy information system". Für jede Eingangsgröße und jede Zahl x aus dem Wertebereich der Eingangsgröße ist die Summe der Zugehörigkeitswerte von x zu den Elementen der linguistischen Hecke der Eingangsgröße gleich 1. Die linguistische Hecke einer Kenngröße ist die Menge der Zugehörigkeitsfunktionen für die linguistischen Aussagen der Größe.

Der Begriff "vollständige Regelmenge" gemäß Anspruch 1 wird an einem Beispiel erläutert: Es seien X und Y die beiden Eingangsgrößen des unscharfen Reglers, und es seien "X ist groß" und "Y ist klein" zwei linguistische Aussagen über X bzw. Y. Dann ist die Regelmenge nur dann vollständig, wenn zu ihr eine Regel mit der Prämisse "X

ist groß" oder eine mit der Prämisse "Y ist klein" oder eine mit der Prämisse "X ist groß UND Y ist klein" gehört.

Am selben Beispiel wird der Begriff "konsistente Regelmenge" veranschaulicht: Die Regelmenge ist nur dann konsistent, wenn sie entweder höchstens eine Regel mit der Prämisse "X ist groß UND Y ist klein" oder höchstens eine mit der Prämisse "X ist groß" oder höchstens eine mit der Prämisse "Y ist klein" besitzt, aber nicht sowohl eine Regel mit der Prämisse "X ist groß UND Y ist klein" als auch eine mit der Prämisse "X ist groß", nicht sowohl eine Regel mit der Prämisse "X ist groß UND Y ist klein" als auch eine mit der Prämisse "Y ist klein" und nicht sowohl eine Regel mit der Prämisse "X ist groß" als auch eine mit der Prämisse "Y ist klein" besitzt. Die Regelmenge ist darüber hinaus nur dann konsistent, wenn sie nicht zwei Regeln mit der Prämisse "X ist groß" aufweist.

Die Regelmenge im obigen Beispiel ist also nur dann vollständig und konsistent, wenn es entweder genau eine (eine und nur eine) Regel mit der Prämisse "X ist groß UND Y ist klein" oder genau eine mit der Prämisse "X ist groß" oder genau eine mit der Prämisse "Y ist klein" gibt.

Die Bedingungen, die beispielhaft für ein Paar linguistischer Aussagen veranschaulicht werden, müssen natürlich für jedes Paar von linguistischen Aussagen über die Eingangsgrößen gelten.

Die Forderung, daß die linguistischen Aussagen in der Prämisse jeder Regel stets mit UND verknüpft sind, bedeutet für obiges Beispiel, daß es keine linguistische Regel mit der Prämisse "X ist groß ODER Y ist klein" geben darf. Die Bedingung, daß die linguistischen Aussagen in der Prämisse stets paarweise verschiedenen Eingangsgrößen gelten, schließt beispielsweise eine Regel mit der Prämisse "X ist klein UND X ist ziemlich groß" aus.

Im folgenden wird exemplarisch für den Fall zweier Eingangsgrößen X und Y gezeigt, daß der Divisor in der Beziehung (1) im Oberbegriff des Patentanspruchs 1 stets 1 ist. Sei $\{\mu^{(1)}, ..., \mu^{(m)}\}$ die linguistische Hecke für X, $\{\nu^{(1)}, ..., \nu^{(n)}\}$ die für Y und $\{\lambda^{(1)}, ..., \lambda^{(1)}\}$ die für Z. Für i = 1, ..., N seien $\mu_i$, $\nu_i$ und $\lambda_i$ die Zugehörigkeitsfunktionen für die linguistischen Aussagen über X, Y und Z in der Regel $R_i$; $\mu_i$, $\nu_i$, $\lambda_i$ sind Elemente aus $\{\mu^{(1)}, ..., \mu^{(m)}\}$, $\{\nu^{(1)}, ..., \nu^{(n)}\}$ bzw. $(\lambda^{(1)}, ..., \lambda^{(1)}\}$. Wegen der Beziehung (2) gemäß Patentanspruch 1 gilt dann für die Summe der Gewichtsfaktoren:

$$\sum_{i=1}^{N} \omega_i(t) = \sum_{i=1}^{N} a_{i1}(t) * a_{i2}(t) = \sum_{i=1}^{N} \mu_i(x_t) * \nu_i(y_t) \qquad (3)$$

Berücksichtigt man, daß $\{R_1, ..., R_N\}$ eine vollständige und konsistente Regelmenge ist, d.h. jede mögliche Kombination von $\mu^{(j)}$ und $\nu^{(k)}$ - direkt oder indirekt - genau einmal im letzten Ausdruck der Beziehung (3) auftritt, so kann man hier die verschiedenen Summanden umsortieren und als eine Doppelsumme schreiben. Zieht man weiterhin in Betracht, daß die linguistischen Hecken für X und Y jeweils ein "fuzzy information system" bilden, so erhält man

$$\sum_{i=1}^{N} \omega_i(t) = \sum_{j=1}^{m}\sum_{k=1}^{n} \mu^{(j)}(x_t) * \nu^{(k)}(y_t) = \sum_{j=1}^{m} \mu^{(j)}(x_t) * \sum_{k=1}^{n} \nu^{(k)}(y_t) = 1 \qquad (4)$$

Ein unscharfer Regler, der nach dem erfindungsgemäßen und in Fig. 2 dargestellten Verfahren arbeitet, läßt sich sowohl als Softwareprogramm als auch durch handelsübliche Rechentechnik-Hardware-Bausteine technisch realisieren.

Vorteilhafte Ausgestaltungen des erfindungsgemäßen Verfahrens sind in den Ansprüchen 2 und 3 gekennzeichnet.

Fig. 4 zeigt die gemäß Anspruch 2 zulässigen trapezförmigen Zugehörigkeitsfunktionen (hierzu zählen dreiecksförmige Funktionen sowie Rampenfunktionen). Jede trapezförmige Zugehörigkeitsfunktion ist eindeutig durch vier Stützstellen $x_1, ..., x_4$ gekennzeichnet, falls man festlegt:

$\mu(x_1) = \mu(x_4) = 0$ und $\mu(x_2) = \mu(x_3) = 1$.

Bei Beschränkung auf trapezförmige Zugehörigkeitsfunktionen läßt sich jeder Zugehörigkeitswert dadurch exakt bestimmen, daß zunächst die beiden dem aktuellen Wert benachbarten Stützstellen bestimmt werden und dann über diese beiden Stützstellen linear interpoliert wird (vgl. Fig. 4). Auch die in der ersten Phase erforderliche "defuzzification" der Zugehörigkeitsfunktionen für die Konklusionen der Regeln ist bei dieser Beschränkung leicht durchführbar.

Die Kennfläche des unscharfen Reglers ist im Falle trapezförmiger Zugehörigkeitsfunktionen räumlich-multilinear. Wählt man die Stützpunkte geeignet, so läßt sich ein erfindungsgemäß arbeitender unscharfer Regler exakt nachbilden durch räumlich-lineare Interpolation über die Stützpunkte. "Exakt" heißt: der originale unscharfe Regler und die interpolierende Nachbildung haben dieselbe Kennfläche.

Bei Beschränkung auf trapezförmige Zugehörigkeitsfunktionen läßt sich ein nach dem vorliegenden und in

Fig. 2 gezeigten Verfahren arbeitender unscharfer Regler auch realisieren durch räumlich-lineare Interpolation über geeignet gewählte Stützstellen.

Eine weitere vorteilhafte Ausgestaltung der Erfindung ist es, daß der unscharfe Regler, wie in Anspruch 3 beschrieben, zu jedem Abtastzeitpunkt seine Arbeit in zwei Schritten verrichtet:

- **o** Im ersten Schritt werden die Zugehörigkeitswerte des aktuellen Wertes jeder Eingangsgröße zu allen linguistischen Aussagen über die Eingangsgröße bestimmt und zwischengespeichert.
- **o** Im zweiten Schritt wird der Wert $\omega_i(t)$ gemäß Beziehung (2) des Patentanspruchs durch Lesezugriff auf diese zwischengespeicherten Werte berechnet. Bei dieser Ausgestaltung müssen für den Fall zweier Eingangsgrößen X und Y $n_x + n_y$ Zugehörigkeitswerte bestimmt werden, wobei $n_x$ und $n_y$ die Elementezahl der linguistischen Hecke von X bzw. Y bezeichnen. Würde man für i=1, ..., N bei der Berechnung des Wertes $\omega_i(t)$ nach Beziehung (2) jedesmal neu die Zugehörigkeitswerte $a_{i1}(t)$ und $a_{i2}(t)$ bestimmen, so wären im ungünstigsten Falle $n_x * n_y$ Bestimmungen eines Zugehörigkeitswertes durchzuführen.

## Patentansprüche

1. Verfahren zur Aufstellung von Zugehörigkeitsfunktionen für linguistische Aussagen über die Eingangsgrößen eines unscharfen Reglers sowie zur Aufstellung und zur Auswertung einer Menge linguistischer Regeln $\{R_1, \ldots, R_N\}$, die jeweils als Prämisse eine oder mehrere linguistische Aussagen über Eingangsgrößen und als Konklusion eine linguistische Aussage über die von den Regeln bestimmte Größe besitzen, wobei für jede linguistische Aussage eine Zugehörigkeitsfunktion über der Grundgesamtheit der in der Aussage betroffenen Größe vorliegt, und wobei

   - in einer ersten Phase für jede der Regeln $R_i$ die Konklusion durch einen Zahlwert $Z_i$ für die von der Aussage betroffene Größe ersetzt wird, der durch "defuzzification" der die linguistische Aussage der Konklusion charakterisierenden Zugehörigkeitsfunktion gewonnen wird, und

   - in einer zweiten Phase für jeden Zeitpunkt t, für den die Auswertung vorgenommen werden soll, in allen Regeln $R_i$ für jede linguistische Aussage $A_{ij}$, die in der Prämisse von $R_i$ auftritt, der Zugehörigkeitsgrad $a_{ij}(t)$ ermittelt wird, den der aktuelle Wert der von der linguistischen Aussage betroffenen Größe in der die linguistische Aussage charakterisierenden Zugehörigkeitsfunktion besitzt, und die Zahl $z_t$ nach der Beziehung

$$z_t = \sum_{i=1}^{N} (\omega_i(t) \ * \ Z_i) \ / \sum_{i=1}^{N} \omega_i(t) \qquad (1),$$

     wobei für i = 1, ... , N $\omega_i(t)$ die Zusammenfassung der Zugehörigkeitsgrade $a_{ij}(t)$ zu einer aktuellen Gewichtung der Regel $R_i$ nach einer T-Norm ist, gebildet und als Wert der von den linguistischen Regeln bestimmten Größe verwendet wird,

   **dadurch gekennzeichnet,** daß

   - die aktuelle Gewichtung der Regel $R_i$ gemäß der Beziehung

$$\omega_i(t) = \prod_{j=1}^{N_i} a_{ij}(t) \qquad (2)$$

     gebildet wird,
   - die linguistische Hecke jeder Eingangsgröße ein unscharfes Informationsmuster ("fuzzy information system") bildet, d.h. daß für jeden möglichen Wert einer Eingangsgröße die Summe der Zugehörigkeitswerte zu den die linguistischen Aussagen über die Eingangsgröße kennzeichnenden Zugehörigkeitsfunktionen stets 1 ist,
   - zwei linguistische Aussagen in der Prämisse jeder Regel stets nur in einer UND-Beziehung verknüpft werden, und dabei verschiedene Eingangsgrößen X und Y getten,
   - die Regelmenge vollständig und konsistent ist, d.h. es entweder genau eine (eine und nur eine) Regel mit der

Prämisse "X ist groß UND Y ist klein" oder genau eine mit der Prämisse "X ist groß" oder genau eine mit der Prämisse "Y ist klein" gibt.

- und dadurch in der Beziehung (1) der Divisor

$$\sum_{i=1}^{N} \omega_i(t)$$

immer den Wert 1 annimmt.

**2.** Verfahren nach Anspruch 1,
**dadurch gekennzeichnet,**
daß trapezförmige Zugehörigkeitsfunktionen verwendet werden.

**3.** Verfahren nach Anspruch 1,
**dadurch gekennzeichnet,**
daß zu jedem Abtastzeitpunkt für jede Eingangsgröße die Zugehörigkeitswerte ihres aktuellen Wertes zu allen linguistischen Aussagen über diese Eingangsgröße vorab bestimmt, zwischengespeichert und bei der Regelanwendung für diesen Abtastzeitpunkt die gespeicherten Zugehörigkeitswerte verwendet werden.

## Claims

**1.** Method for the setting-up of association functions for linguistic statements about the input magnitudes of a fuzzy controller as well as for the setting-up and for the evaluation of a quantity of linguistic rules $\{R_1$ to $R_N\}$, which each have one or more linguistic statements about input magnitudes as premise and one linguistic statement about the magnitude determined by the rules as conclusion, wherein an association function about the basic totality of the magnitude concerned in the statement is present for each linguistic statement and wherein

- the conclusion is replaced for each of the rules $R_i$ by a numerical value $Z_i$ for the magnitude concemed by the statement, which numerical value is obtained by "defuzzification" of the association function characterising the linguistic statement of the conclusion, in a first phase and
- the association degree $a_{ij}(t)$, which the actual value of the magnitude concemed by the linguistic statement has in the association function characterising the linguistic statement, is ascertained in all rules $R_i$ for each linguistic statement $A_{ij}$, which appears in the premise of $R_i$, for each instant t in a second phase and the number $z_t$ is formed according to the relationship:

$$z_t = \sum_{i=1}^{N} (\omega_i(t) \ * \ Z_i) \ / \sum_{i=1}^{N} \omega_i(t) \qquad (1)$$

wherein $\omega_i(t)$ is the actual weighting of the rule $R_i$ for i = 1 to N, and is used as value of the magnitude determined by the linguistic rules,

characterised in that

- the actual weighting of the rule $R_i$ is formed according to the relationship:

$$\omega_i(t) = \prod_{j=1}^{N_i} a_{ij}(t) \qquad (2)$$

- the linguistic hedge of each input magnitude forms a fuzzy information system, i.e. the sum of the association values to the association functions characterising the linguistic statements about the input magnitude is always 1 for each possible value of an input magnitude,
- the linguistic statements in the premise of each rule are always interlinked in an AND-relationship,
- the linguistic statements in the premise of each rule are valid in pairs for different input magnitudes,
- the control quantity is complete, thus for each possible combination ($statement_1$ to $statement_n$) of linguistic statements, wherein n denotes the number of input magnitudes and $statement_i$ applies for the $i^{th}$ input magnitude (i = 1 to n), there being a rule $R_i$, the premise of which consists exclusively of linguistic statements of the quantity {$statement_1$ to $statement_n$}, and
- the control quantity is consistent, there thus being at most one rule $R_i$, the premise of which consists exclusively of linguistic statements of the quantity {$statement_1$ to $statement_m$}, for each possible combination quantity {$statement_1$ to $statement_m$} of linguistic statements of input magnitudes, and
- the divisor

$$\sum_{i=1}^{N} \omega_i(t)$$

in the relationship (1) thereby always assumes the value 1.

**2.** Method according to claim 1, characterised in that trapezoidal association functions are used.

**3.** Method according to claim 1, characterised in that at each scanning instant for each input magnitude, the association values of its actual value to all linguistic statements about this input magnitude are determined preliminarily, stored intermediately and the stored association values are used in the control application for this scanning instant.

## Revendications

**1.** Procédé d'établissement de fonctions d'appartenance pour des informations linguistiques concernant les grandeurs d'entrée d'un régulateur flou ainsi que de déterminations et d'évaluation d'une quantité de règles linguistiques {$R_1$,...,$R_N$}, qui possèdent respectivement en tant que prémisse une ou plusieurs informations linguistiques concernant des grandeurs d'entrée et en tant que conclusion une information linguistique au sujet de la grandeur déterminée par les règles, pour chaque information linguistique existant une fonction d'appartenance concernant le total de base de la grandeur concernée dans l'information, et

- au cours d'une première phase pour chacune des règles $R_i$, la conclusion étant remplacée par une valeur numérique $Z_i$ pour la grandeur concernée par l'information, qui est obtenue par "défuzzification" de la fonction d'appartenance caractérisant l'information linguistique de la conclusion, et
- au cours d'une seconde phase pour chaque instant t, pour lequel l'évaluation doit être effectuée, dans toutes les règles $R_i$ pour chaque information linguistique $A_{ij}$, qui apparaît dans la prémisse de $R_i$, le degré d'appartenance $a_{ij}(t)$ étant détecté, qui possède la valeur réelle de la grandeur concernée par l'information linguistique dans la fonction d'appartenance caractérisant l'information linguistique et le nombre $z_t$ selon la relation

$$z_t = \sum_{i=1}^{N} (\omega_i(t) * Z_i) \; / \; \sum_{i=1}^{N} \omega_i(t) \qquad (1)$$

pour i = 1,...,N, $\omega_i(t)$ étant la pondération réelle de la règle $R_i$, étant formée et utilisée en tant que valeur de la grandeur déterminée par les règles linguistiques,

caractérisé en ce que

- la pondération réelle de la règle $R_i$ selon la relation

$$\omega_i(t) = \prod_{j=1}^{N_i} a_{ij}(t) \qquad (2)$$

est formée,

- la limite linguistique de chaque grandeur d'entrée forme un système d'information flou ("fuzzy information system") c'est-à-dire que pour chaque valeur possible d'une grandeur d'entrée, la somme des valeurs d'appartenance pour les fonctions d'appartenance caractérisant les informations linguistiques concernant la grandeur d'entrée est toujours égale à 1,
- les informations linguistiques dans la prémisse de chaque règle sont toujours combinées par une relation ET,
- les informations linguistiques dans la prémisse de chaque règle s'appliquent à différentes grandeurs d'entrée par paires,
- la quantité de règles est complète, ainsi pour chaque combinaison possible ($information_1$,..., $information_n$) d'informations linguistiques, n désignant le nombre des grandeurs d'entrée et l'$information_i$ de la i-ème grandeur d'entrée s'applique (i = 1,...,n), il existe une règle $R_i$ dont la prémisse se compose exclusivement d'informations linguistiques provenant de la quantité {$information_i$,..., $information_n$}, et
- la quantité de règles est cohérente, il existe ainsi pour chaque combinaison possible ($information_1$,...,$information_m$) d'informations linguistiques concernant des grandeurs d'entrée au plus une règle $R_i$, dont la prémisse se compose exclusivement d'informations linguistiques provenant de la quantité {$information_1$,...,$information_m$},
- et ainsi dans la relation (1), le dénominateur

$$\sum_{i=1}^{N} \omega_i(t)$$

prend toujours la valeur 1.

**2.** Procédé selon la revendication 1, caractérisé en ce qu'on utilise des fonctions d'appartenance trapézoïdales.

**3.** Procédé selon la revendication 1, caractérisé en ce qu'à chaque instant d'analyse pour chaque grandeur d'entrée, les valeurs d'appartenance de leur valeur réelle pour toutes les informations linguistiques concernant ces grandeurs d'entrée sont préalablement déterminées, mémorisées temporairement et les valeurs d'appartenance mémorisées sont utilisées lors de l'application de la règle pour cet instant d'analyse.

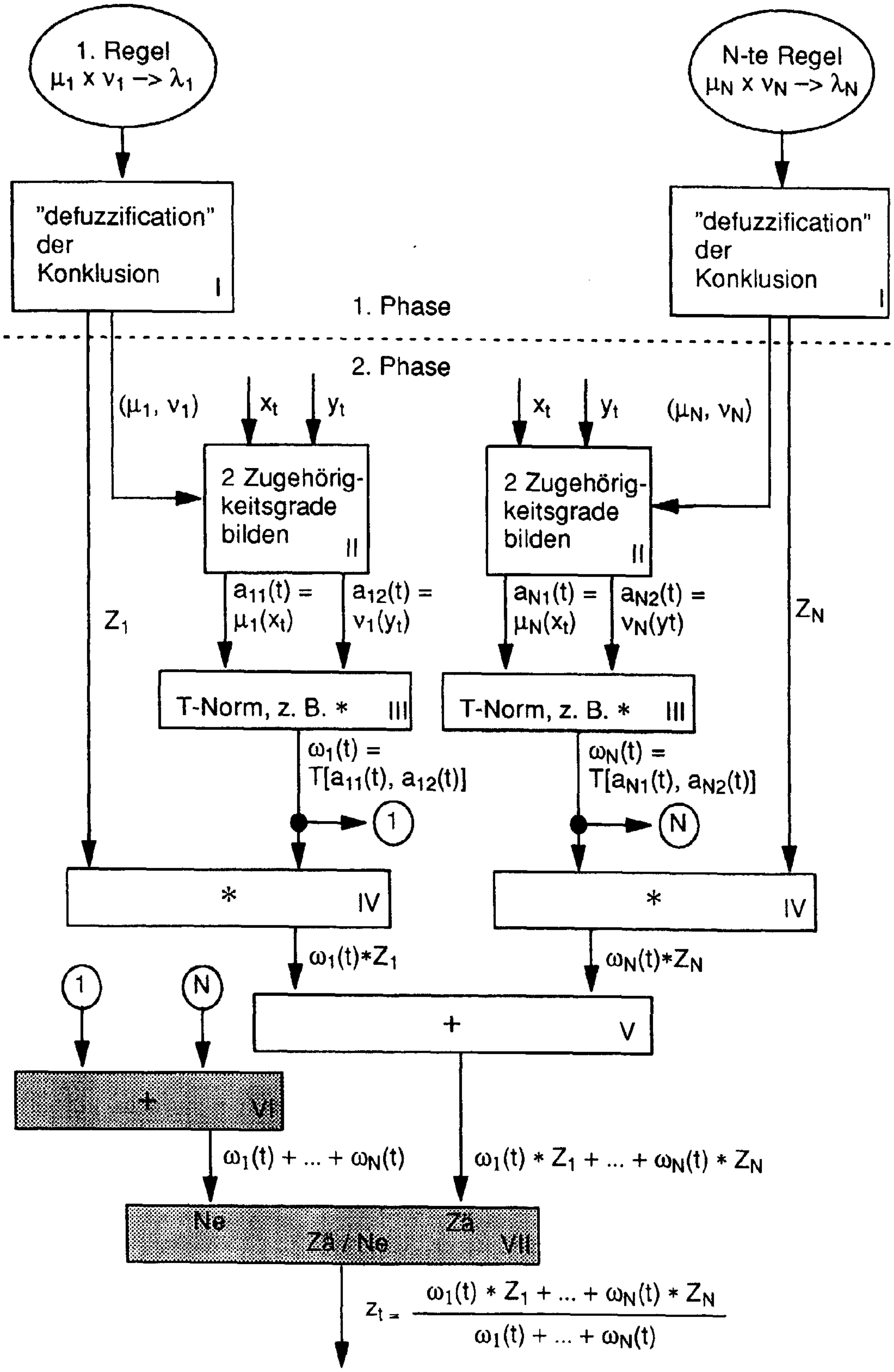
1. Regel
μ1 x ν1 -> λ1
N-te Regel
μN x νN -> λN
"defuzzification" der Konklusion I
"defuzzification" der Konklusion I
1. Phase
2. Phase
(μ1, ν1)
xt
yt
xt
yt
(μN, νN)
2 Zugehörigkeitsgrade bilden II
2 Zugehörigkeitsgrade bilden II
a11(t) = μ1(xt)
a12(t) = ν1(yt)
aN1(t) = μN(xt)
aN2(t) = νN(yt)
Z1
ZN
T-Norm, z. B. * III
T-Norm, z. B. * III
ω1(t) = T[a11(t), a12(t)]
ωN(t) = T[aN1(t), aN2(t)]
1
N
* IV
* IV
ω1(t)*Z1
ωN(t)*ZN
1
N
+ V
+ VI
ω1(t) + ... + ωN(t)
ω1(t) * Z1 + ... + ωN(t) * ZN
Ne
Zä
Zä / Ne
VII
zt = (ω1(t) * Z1 + ... + ωN(t) * ZN) / (ω1(t) + ... + ωN(t))

Figur 1

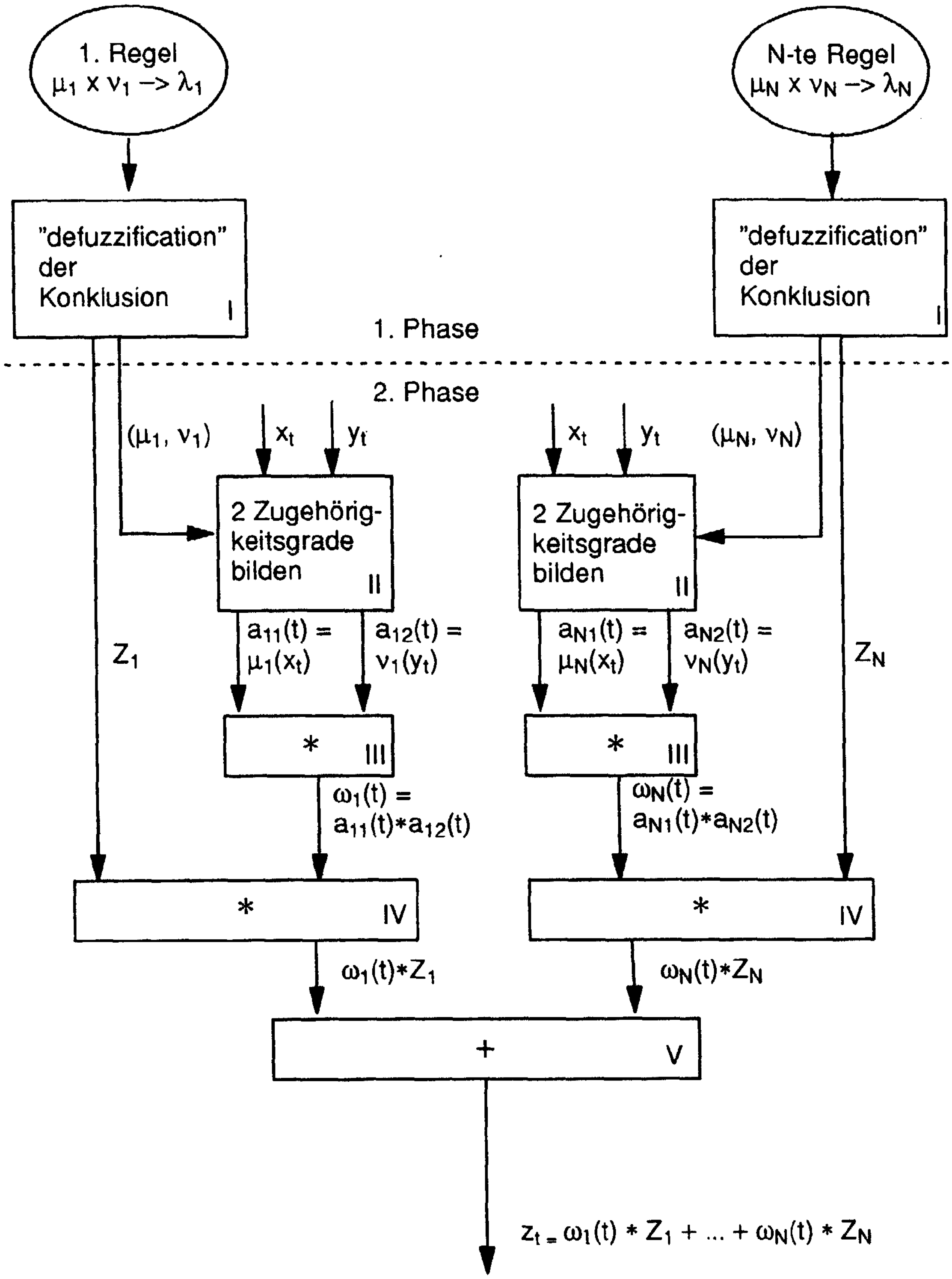
1. Regel
μ1 x ν1 –> λ1
N-te Regel
μN x νN –> λN
"defuzzification" der Konklusion I
"defuzzification" der Konklusion I
1. Phase
2. Phase
(μ1, ν1)
xt
yt
xt
yt
(μN, νN)
2 Zugehörig-keitsgrade bilden II
2 Zugehörig-keitsgrade bilden II
Z1
a11(t) = μ1(xt)
a12(t) = ν1(yt)
aN1(t) = μN(xt)
aN2(t) = νN(yt)
ZN
* III
* III
ω1(t) = a11(t)*a12(t)
ωN(t) = aN1(t)*aN2(t)
* IV
* IV
ω1(t)*Z1
ωN(t)*ZN
+ V
zt = ω1(t) * Z1 + ... + ωN(t) * ZN

**Figur 2**

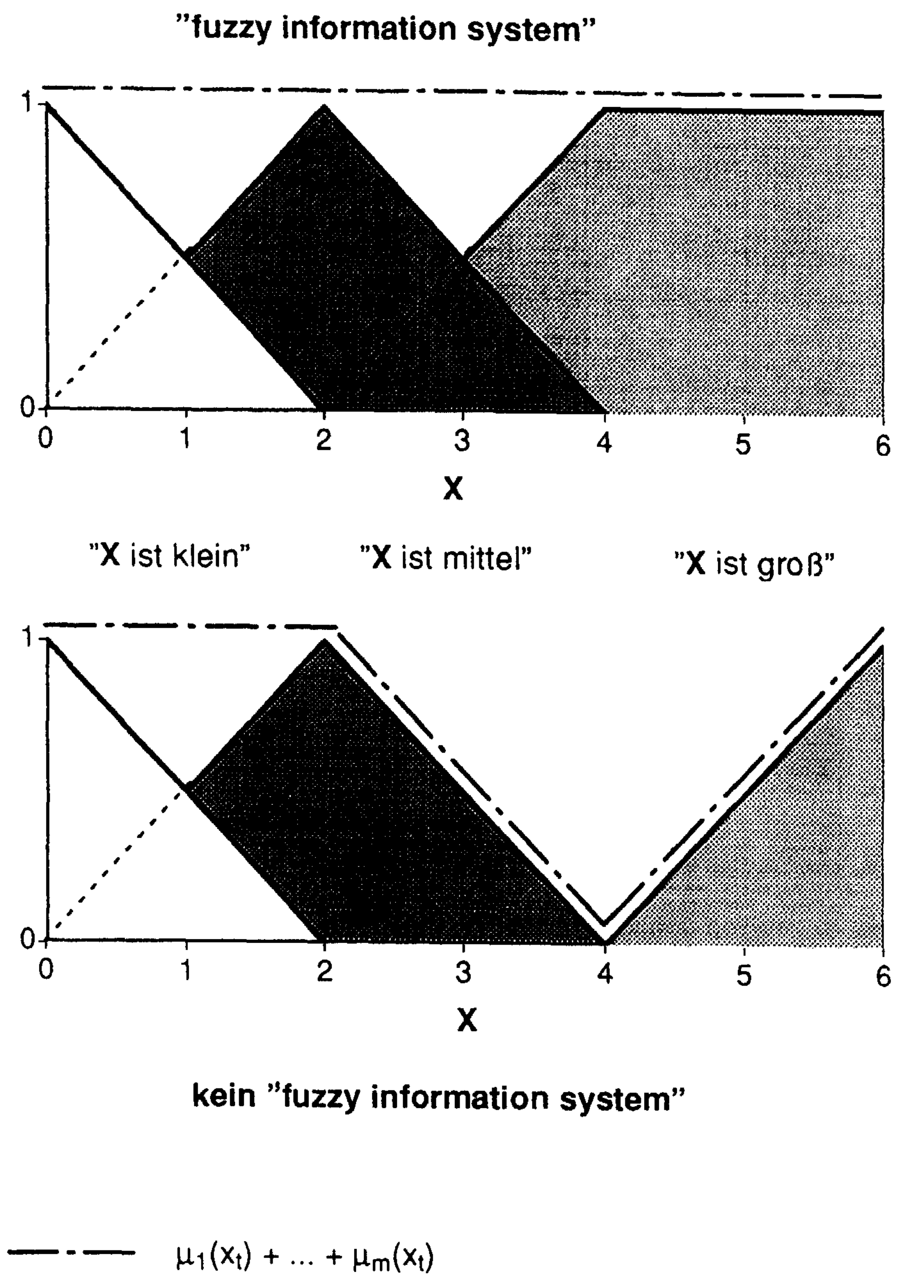
"fuzzy information system"
1
0
0
1
2
3
4
5
6
X
"X ist klein"
"X ist mittel"
"X ist groß"
1
0
0
1
2
3
4
5
6
X
kein "fuzzy information system"
$\mu_1(x_t) + \ldots + \mu_m(x_t)$

Figur 3

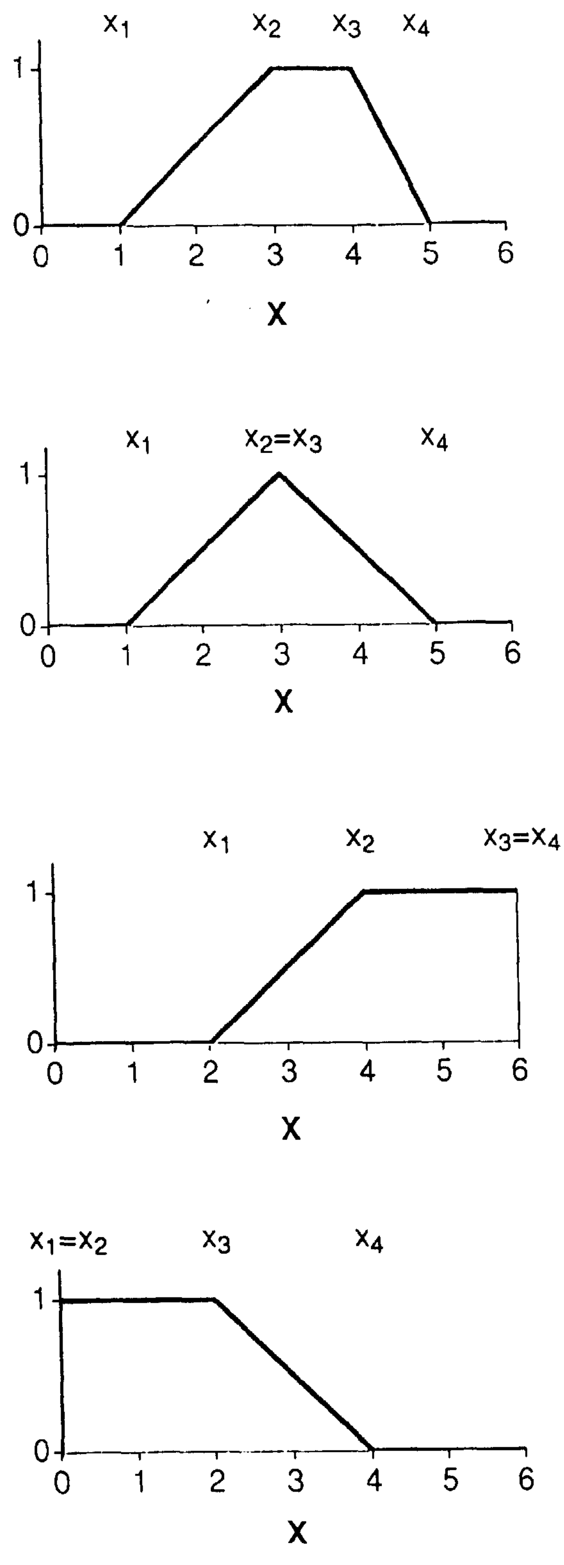
x1 x2 x3 x4
1
0
0 1 2 3 4 5 6
X
x1 x2=x3 x4
1
0
0 1 2 3 4 5 6
X
x1 x2 x3=x4
1
0
0 1 2 3 4 5 6
X
x1=x2 x3 x4
1
0
0 1 2 3 4 5 6
X

Figur 4